# EUROPEAN PATENT APPLICATION

(11) **EP 3 793 065 A1**
(43) Date of publication of application: **17.03.2021**
(21) Application number: 20195934.3
(22) Date of filing: 14.09.2020
(51) Int. Cl.: H02K 1/27, H02K 1/30, H02K 21/24

(54) **ROTOR FOR AN AXIAL-FLUX ELECTRIC MACHINE, AND AXIAL-FLUX ELECTRIC MACHINE PROVIDED WITH SAID ROTOR**

(30) Priority: 16.09.2019 IT 201900016370
(71) Applicant: Lucchi R. Elettromeccanica S.r.l., 47922 Rimini (IT)
(72) Inventor: LUCCHI, Giorgio, I-47922 Rimini (IT)
(74) Representative: Metroconsult Srl

(57) **Abstract**

Rotor (1) for an axial-flux electric machine (2), said rotor (1) being configured for turning about an axis of rotation (X) of its own, said rotor (1) comprising at least one rotor part (10) of a first type, adapted to be mounted on the rotary shaft (3) of the electric machine (2), wherein said rotor part (10) of the first type comprises a supporting structure (100) and a plurality of permanent magnets (101) supported by the supporting structure (100). The supporting structure (100) is a discoid structure having an axis (102) coinciding with the axis of rotation (X) of the rotor (1). The supporting structure (100) comprises: a central portion (103) centered on the axis (102) and having a seat (104) shaped as a cylindrical through hole around the axis (102) for insertion and connection to the shaft (3) of the electric machine (2); an annular structure (105) centered on the axis (102) and surrounding the central portion (103), said annular structure (105) being connected to the central portion (103) by first and second radial connection elements (106, 107). The first connection elements (106) are mutually angularly spaced apart in a first plane (P1) perpendicular to the axis (102), each pair of successive first connection elements (106) defining, in combination with the annular structure (105) and the central portion (103), a respective first through hole (110). The second connection elements (107) are mutually angularly spaced apart in a second plane (P2) perpendicular to the axis (102) and spaced out relative to the first plane (P1) along the axis (102), each pair of successive second connection elements (107) defining, in combination with the annular structure (105) and the central portion (103), a respective second through hole (111). Each permanent magnet (101) is inserted and supported in a respective first through hole (110) with its north pole and its south pole aligned in succession along a line parallel to the axis (102), wherein the south-north vector of the permanent magnet (101) defines a magnetic axis (M) of the permanent magnet (101), the plurality of permanent magnets (101) being arranged along a circumference (C1) centered on the axis (102) and lying in a plane perpendicular to the axis (102), wherein the permanent magnets (101) are arranged in succession along said circumference (C1) with their magnetic axes (M) oriented in opposite directions, in an alternate manner, parallel to the axis (102). The rotor part (10) of the first type further comprises a magnetic-flux conveying device formed by a plurality of magnetic-flux conveying elements (114) made of a material with high magnetic permeability, each one of the second through holes (111) containing and supporting a respective conveying element (114), said conveying elements (114) being arranged along a respective circumference (C2) centered on the axis (102) and lying in a respective plane perpendicular to the axis (102). The permanent magnets (101) and the conveying elements (104) are positioned on opposite sides of the supporting structure (100) along the axis (102) of the supporting structure (100). Each conveying element (114) faces towards and is in contact with a respective one of said first connection elements (106). Each permanent magnet (101) faces towards and is in contact with a respective one of said second connection elements (107). Each permanent magnet (101) faces towards two conveying elements (114), said two conveying elements (114) being successive around the axis (102) and separated by the second connection element (107) facing towards and in contact with said permanent magnet (101).

## Description

The present invention relates to a rotor for an axial-flux electric machine.

The invention further relates to an axial-flux electric machine equipped with said rotor.

In general, an electric machine comprises a stationary part, commonly called "stator" (or "stator part") and a moving part, both carrying electric conductor windings and/or magnetic and/or electromagnetic field sources. Together with the machine structure, the windings and the sources define both an electric circuit (i.e. the set of structures and materials in which an electric current and/or an electric field flows) and a magnetic circuit (i.e. the set of structures and materials in which a magnetic field flows). In order to operate, the electric machine exploits electromagnetic induction phenomena (caused by the linkage between the magnetic field fluxes and the electric windings) and/or electromagnetic forces (generated by the magnetic/electromagnetic field sources on the electric windings, through which current flows, and/or on the other electric/electromagnetic field sources).

Some electric machines (e.g. electric motors) can transform electric currents circulating in electric windings into motion of the moving part relative to the stator. Some electric machines (e.g. generators) can generate electric currents and/or electromotive forces in electric windings through the motion of the moving part relative to the stator. An electric machine of this type can generally be used in both ways (e.g. both as a generator and as a motor). The electric windings may be formed around a core of magnetic material, for the purpose of optimizing the effect of the linkage between the magnetic flux and the electric windings.

In one type of electric machine, the moving part is a rotary part, also referred to as "rotor" (or "rotor part"). The axis of rotation of the rotor is particularly important, since it becomes a reference and/or symmetry axis for the structure of the electric machine. During the motion of the rotor relative to the stator, portions of the magnetic field sources and portions of the electric windings come to face each other at a certain mutual distance. Such mutual distance defines a gap (a so-called "air gap") between the rotor and the stator.

In an axial-flux electric machine, the arrangement of the magnetic field sources and of the electric windings, to which the magnetic field links, is such that in the above-described gap between the rotor and the stator the magnetic field flux lines can be approximated to segments whose straight lines are parallel to the axis of rotation of the rotor.

It is known that axial-flux electric machines have a specific architecture wherein the stator and rotor windings and/or permanent magnets are arranged on respective disks parallel and close to each other, separated by an air gap whose thickness extends in the direction of the axis of rotation of the rotor.

Generally, the rotor of an axial-flux electric machine is of the permanent-magnet type, while the stator comprises a toroidal ferromagnetic core carrying several coils that link the rotor magnetic field.

In other cases, the stator is of the permanent-magnet type, while the rotor comprises a toroidal ferromagnetic core carrying the coils that link the stator magnetic field. In this latter case, the rotor is also referred to as a "winding-type rotor".

With reference to the case wherein the rotor is made by using permanent magnets, it is usually constructed as a disk of ferromagnetic material (e.g. iron, also known under the commercial name Armco®), on which the permanent magnets are fixed. The ferromagnetic material closes the magnetic circuit constituted by the permanent magnets, causing the flux lines exiting a given magnet to reach the adjacent magnet. The rotor disk has a circumferential edge made of the same ferromagnetic material as the rest of the disk, which holds the magnets in position and prevents them from coming off the disk body because of the centrifugal force to which they are subjected during the operation of the electric machine.

The Applicant has verified that, when the machine is operating at high speeds (e.g. at tangential speeds in excess of 80-90 m/s), the structure of the rotor part as briefly described above is no longer suitable. In fact, due to the high mechanical stresses it undergoes (which include the centrifugal force), it will tend, on the one hand, to not be able to hold the permanent magnets in position and, on the other hand, to deteriorate in the radially innermost region, i.e. the one splined onto the shaft of the machine.

The Applicant believes that these problems are due to the material employed for fabricating the rotor disk: as a matter of fact, iron does not appear to be adequate to withstand the mechanical stresses occurring at high speeds.

In light of the above, it is the object of the present invention to provide a rotor for an axial-flux electric machine which can operate at high speeds without suffering any structural deterioration.

This object is fully achieved by the rotor for an axial-flux electric machine, and by the axial-flux electric machine equipped with said rotor, as set out in the appended claims.

Further features and advantages will become more apparent in the light of the following detailed description of some preferred, but non-limiting, embodiments of the invention. Such description is provided herein with reference to the annexed drawings, which are also supplied by way of non-limiting example, wherein:
- Figure 1 shows an exploded perspective view of a rotor part of a first type in accordance with a first embodiment of the invention;
- Figures 2a-2b show, respectively, a rear view and a front view of the rotor part of Figure 1;
- Figure 3 shows an exploded perspective view of a rotor part of the first type in accordance with a second embodiment of the invention;
- Figures 4a-4b show, respectively, a rear view and a front view of the rotor part of Figure 3;
- Figures 5a-5b are perspective views, from two different angles, of a rotor part of a second type, different from those shown in Figures 1, 2a-2b and 3, 4a-4b;
- Figure 6 shows a schematic side view of an electric machine comprising two rotor parts of the first type in accordance with said first or second embodiments of the invention;
- Figure 7 shows a schematic side view of an electric machine comprising two rotor parts of the first type and one rotor part of the second type;
- Figure 8 shows a front view of some details of a rotor part of the first type;
- Figure 9 shows a front view of some details of a rotor part of the second type;
- Figure 10 shows a front view of some other details of a rotor part of the first type;
- Figure 11 schematically shows one possible arrangement of elements comprised in the rotor part of the first type;
- Figure 12 schematically shows a side view of an electric machine comprising a rotor part of the second type;
- Figure 13 schematically shows a component belonging to the rotor according to the invention.

In accordance with the annexed drawings, 1 designates as a whole a rotor for an axial-flux electric machine 2 according to the present invention, in a preferred embodiment thereof.

Note that, within the scope of the present invention, the term "electric machine" may refer, without distinction, to either an electric motor or an electric generator.

The rotor 1 is configured for turning about an axis of rotation X of its own, which coincides with the axis A of the electric machine 2.

The rotor 1 comprises at least one rotor part 10 of a first type. As will become apparent below, the rotor 1 may also comprise a rotor part 20 of a second type and/or a further rotor part 30 of the first type.

Each rotor part 10, 20, 30 belonging to the rotor 1 is integrally mounted on the rotary shaft 3 of the electric machine 2.

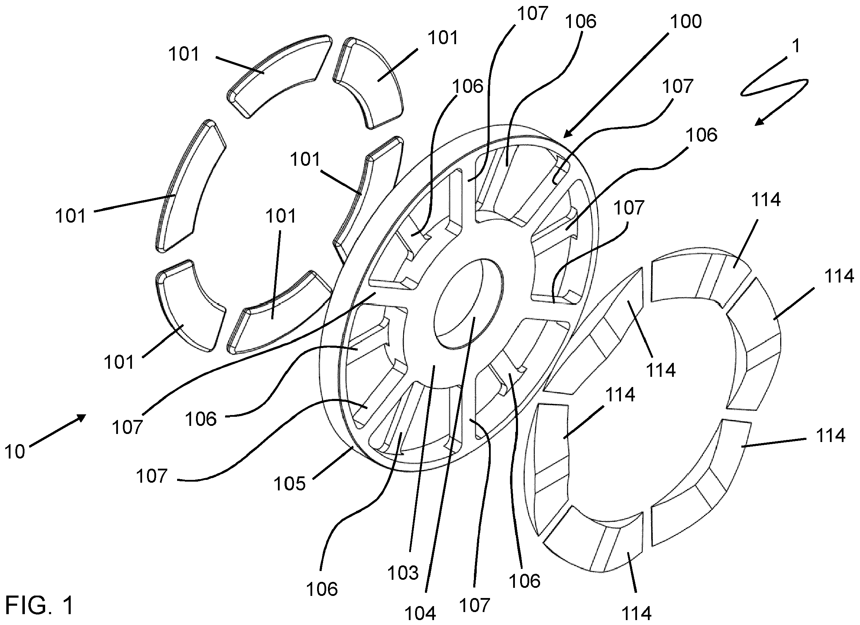

The rotor part 10 of the first type (Figures 1, 2a-2b, 3, 4a-4b) comprises a supporting structure 100 and a plurality of permanent magnets 101.

The permanent magnets 101 are contained in and supported by the supporting structure 100.

More in particular, the supporting structure 100 has a discoid shape having a central axis 102 coinciding with the axis of rotation X of the rotor 1.

The supporting structure 100 comprises a central portion 103 centered on the axis 102 and having a seat 104 shaped as a cylindrical through hole around the axis 102 for insertion and connection to the shaft 3 of the electric machine 2.

In practical terms, the supporting structure 100 is splined onto the shaft 3 of the electric machine 2 through the seat 104 of the central portion 103.

The supporting structure 100 comprises an annular structure 105 centered on the axis 102 and surrounding the central portion 103. The annular structure 105 is connected to the central portion 103 by first connection elements 106 and second connection elements 107.

The first connection elements 106 extend radially from the central portion 103 to the annular structure 105.

The second connection elements 107 extend radially from the central portion 103 to the annular structure 105.

Preferably, the first connection elements 106 and/or the second connection elements 107 are elongate elements, e.g. shaped as rods or bars.

The first connection elements 106 are mutually angularly spaced apart in a first plane P1 perpendicular to the axis 102. Each pair of successive first connection elements 106 defines, in combination with the annular structure 105 and the central portion 103, a respective first through hole 110.

In one embodiment, the first connection elements 106 are angularly equidistant around the axis 102 of the supporting structure 100.

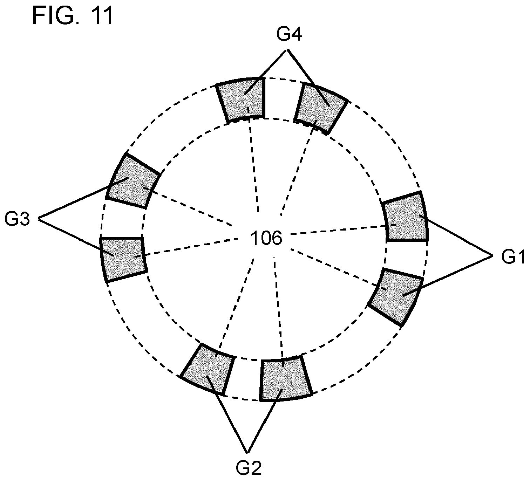

In one embodiment (Fig. 11), the first connection elements 106 may be divided into two or more groups G1-G4; each group is angularly spaced apart from the adjacent group(s), so as to observe a central symmetry relative to the axis 102 of the supporting structure 100. Preferably, in each group the first connection elements 106 are angularly equidistant; preferably, the distance between adjacent connection elements 106 belonging to one same group is substantially equal to the distance between adjacent connection elements 106 belonging to the other group(s). Preferably, the angular distance between adjacent groups is different from an angular distance between adjacent first connection elements 106 belonging to the same group. The Applicant has verified that this embodiment permits attaining optimized results in terms of cogging torque.

The second connection elements 107 are mutually angularly spaced apart in a second plane P2 perpendicular to the axis 102 and spaced apart from the first plane P1 along the axis 102. Each pair of successive second connection elements 107 defines, in combination with the annular structure 105 and the central portion 103, a respective second through hole 111.

In one embodiment, the second connection elements 107 are angularly equidistant around the axis 102 of the supporting structure 100.

In one embodiment, the second connection elements 107 may be divided into two or more groups; each group is angularly spaced apart from the adjacent group(s), so as to observe a central symmetry relative to the axis 102 of the supporting structure 100. Preferably, in each group the second connection elements 107 are angularly equidistant; preferably, the distance between adjacent connection elements 107 belonging to one same group is substantially equal to the distance between adjacent connection elements 107 belonging to the other group(s).

Preferably, each one of the first connection elements 106 is positioned in front of a respective second through hole 111, in particular at a median radial axis of the respective second through hole 111.

Preferably, each one of the second connection elements 107 is positioned in front of a respective first through hole 110, in particular at a median radial axis of the respective first through hole 110.

Preferably, the supporting structure 100 is made of a material with low magnetic permeability and high mechanical strength; one may use, for example, steel, e.g. in the compositions known under the commercial names "Weldox" or "Strenx"; carbon fiber; kevlar; aluminum, zinc and magnesium alloy known under the commercial name "Ergal".

Each one of the permanent magnets 101 is inserted and supported in a respective first through hole 110. The north pole and the south pole of each permanent magnet 101 are aligned in succession along a line parallel to the axis 102.

The south-north vector of each permanent magnet 101 defines a magnetic axis M of the permanent magnet 101.

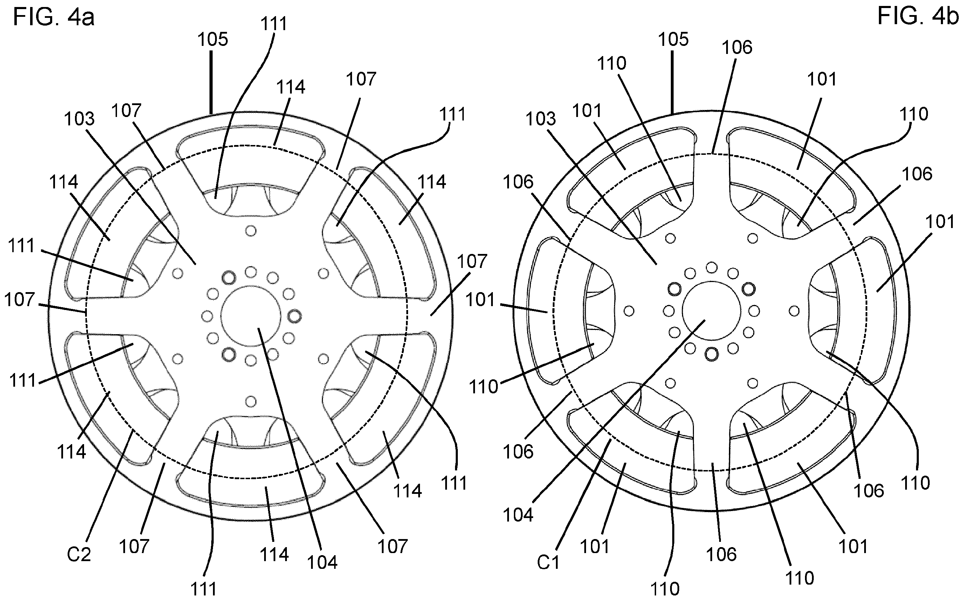

The plurality of permanent magnets 101 are arranged along a circumference C1 centered on the axis 102 and lying in a plane perpendicular to the axis 102 (Figure 4b). The permanent magnets 101 are arranged in succession along such circumference C1 with their magnetic axis M oriented in opposite directions, in an alternate manner, parallel to the axis 102.

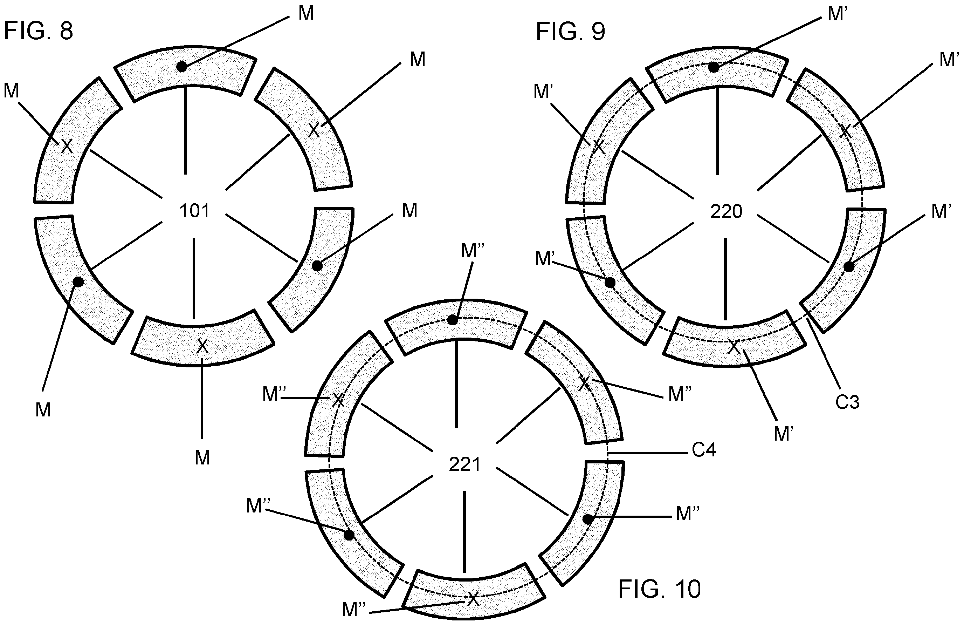

In Figure 8, the permanent magnets 101 are schematically represented with their magnetic axes M. The symbol "X" indicates a direction towards the drawing plane, whereas the symbol "•" indicates a direction away from the drawing plane.

Preferably, each first through hole 110 contains and supports a respective permanent magnet 101.

In accordance with the invention, the rotor part 10 of the first type further comprises a magnetic-flux conveying device.

The magnetic-flux conveying device is formed by a plurality of magnetic-flux conveying elements 114.

The conveying elements 114 are made of a material with high magnetic permeability, such as, for example, iron, pure iron known under the commercial name "ARMCO®", iron-cobalt, etc.

Each second through hole 111 contains and supports a respective conveying element 114.

The conveying elements 114 are arranged along a respective circumference C2 centered on the axis 102 and lie in a respective plane perpendicular to the axis 102 (Figure 4a).

The permanent magnets 101 and the conveying elements 114 are positioned on opposite sides of the supporting structure 100 along the axis 102 of the supporting structure 100.

More in detail, each conveying element 114 faces towards and is in contact with one of the first connection elements 106. Each permanent magnet 101 faces towards and is in contact with one of the second connection elements 107.

More in particular, each permanent magnet 101 faces towards two conveying elements 114, such two conveying elements 114 being successive around the axis 102 and separated by the second connection element 107 facing towards and in contact with such permanent magnet 101.

The conveying elements 114 have the task of closing the magnetic circuit formed by the permanent magnets 101, so that the flux lines exiting a determined permanent magnet reach the adjacent permanent magnet.

In one embodiment, the rotor 1 comprises at least one rotor type 20 of a second type.

The rotor part 20 of the second type is configured to be splined onto the shaft 3 of the electric machine 2.

The rotor part 20 of the second type comprises a supporting structure 200, first permanent magnets 220 and second permanent magnets 221.

The supporting structure 200 supports and contains the first permanent magnets 220 and the second permanent magnets 221.

The supporting structure 200 has a discoid shape having an axis 202 coinciding with the axis of rotation X of the rotor 1.

The supporting structure 200 comprises a central portion 203 centered on the axis 202 and having a seat 204 shaped as a cylindrical through hole around the axis 202 for insertion and connection to the shaft 3 of the electric machine 2, i.e. to be splined onto said shaft 3.

The supporting structure 200 comprises an annular structure 205 centered on the axis 202 and surrounding the central portion 203.

The annular structure 205 is connected to the central portion 203 by first connection elements 206 and second connection elements 207.

The first connection elements 206 extend radially from the central portion 203 to the annular structure 205.

The second connection elements 207 extend radially from the central portion 203 to the annular structure 205.

The first connection elements 206 are mutually angularly spaced apart in a first plane Q1 perpendicular to the axis 202.

The second connection elements 207 are mutually angularly spaced apart in a second plane Q2 perpendicular to the axis 202 and spaced out relative to the first plane Q1 along the axis 202.

Each one of the first connection elements 206 faces towards a respective second connection element 207.

Each pair of successive first connection elements 206 defines, in combination with the annular structure 205 and the central portion 203, a respective first through hole 210.

Each pair of successive second connection elements 207 defines, in combination with the annular structure 205 and the central portion 203, a respective second through hole 211.

Each one of the first through holes 210 faces towards a respective second hole 211.

Preferably, the supporting structure 200 is made of a material with low magnetic permeability and high mechanical strength; one may use, for example, steel, e.g. in the compositions known under the commercial names "Weldox" or "Strenx"; amagnetic steel with a high yield point; carbon fiber; kevlar; aluminum, zinc and magnesium alloy known under the commercial name "Ergal".

Each one of the first permanent magnets 220 is inserted and supported in a respective first through hole 210.

The north pole and the south pole of each one of the first permanent magnets 220 are aligned in succession along a line parallel to the axis 202.

The south-north vector of each one of the first permanent magnets 220 defines a magnetic axis M' of the same first permanent magnet 220.

The first permanent magnets 220 are arranged along a circumference C3 centered on the axis 202 and lie in a respective plane perpendicular to the axis 202 (Figure 9).

The first permanent magnets 220 are arranged in succession along such circumference C3 with their magnetic axes M' oriented in opposite directions, in an alternate manner, parallel to the axis 202.

In Figure 9, the first permanent magnets 220 are schematically represented with their magnetic axes M'. The symbol "X" indicates a direction towards the drawing plane, whereas the symbol "•" indicates a direction away from the drawing plane.

Each one of the second permanent magnets 221 is inserted and supported in a respective second through hole 211.

The north pole and the south pole of each one of the second permanent magnets 221 are aligned in succession along a line parallel to the axis 202.

The south-north vector of each one of the second permanent magnets 221 defines a magnetic axis M" of the same second permanent magnet 221.

The second permanent magnets 221 are arranged along a circumference C4 centered on the axis 202 and lie in a respective plane perpendicular to the axis 202 (Figure 10).

The second permanent magnets 221 are arranged in succession along said circumference with their magnetic axes M" oriented in opposite directions, in an alternate manner, parallel to the axis 202.

In Figure 10, the second permanent magnets 221 are schematically represented with their magnetic axes M". The symbol "X" indicates a direction towards the drawing plane, whereas the symbol "•" indicates a direction away from the drawing plane.

The first permanent magnets 220 and the second permanent magnets 221 are positioned on opposite sides of the supporting structure 200 along the axis 202 of the supporting structure 200.

Each one of the first permanent magnets 220 faces towards a respective second permanent magnet 221.

The respective magnetic axes M', M" are oriented in such a way that the north pole of each one of the first permanent magnets 220 faces towards the south pole of the respective second permanent magnet 221.

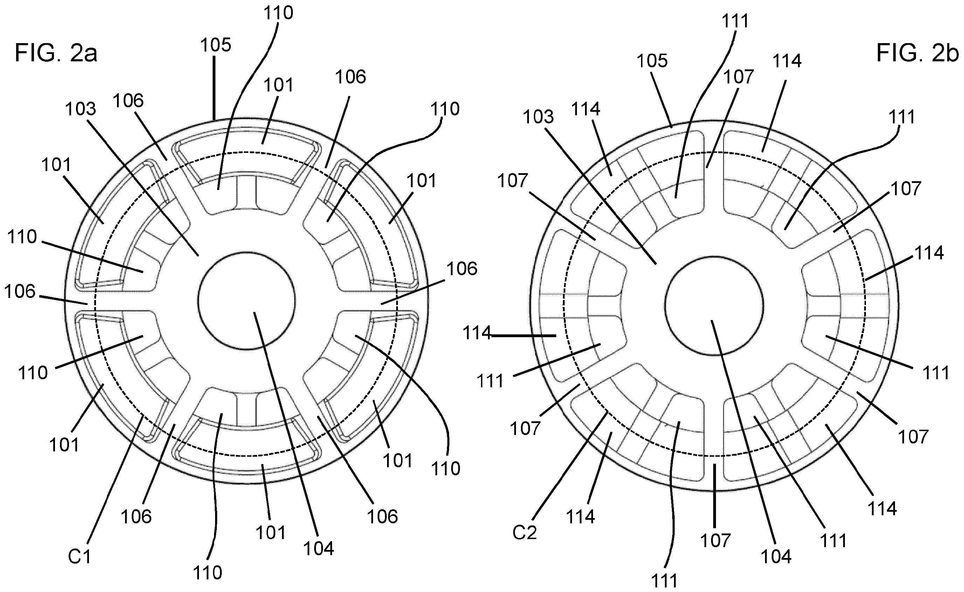

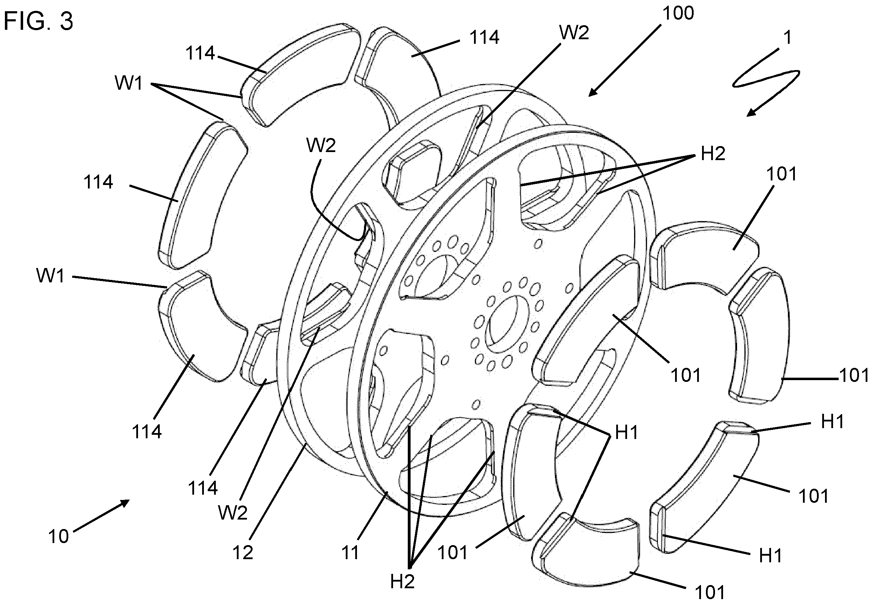

The supporting structure 100, 200 of each rotor part 10, 20, 30 may be made as one piece, with no substantial discontinuity (Figures 1, 2a-2b), or it may be made as two mutually constrained portions (Figures 3, 4a-4b).

In particular, the supporting structure 100, 200 of at least one of the rotor parts 10, 20, 30 may comprise a first discoid portion 11, 21 connected, and preferably fastened, to a second discoid portion 12, 22.

The first discoid portion 11, 21 comprises the first connection elements 106, 206.

The second discoid portion 12, 22 comprises the second connection elements 107, 207.

Preferably, the first discoid portion 11, 21 is connected to the second discoid portion 12, 22 in an angular position around the axis 102, 202 relative to the second discoid portion 12, 22 that can be selected from a set of one or more possible angular positions.

In the embodiment shown in Figures 1, 2a-2b, the conveying elements 114 have a substantially planar major base, a substantially planar minor base parallel to the major base, a pair of oblique sides joining the major base to the minor base. Not considering the curvature required to follow the discoid shape of the supporting structure 100, the conveying elements 114 have a substantially trapezoidal sectional profile.

Conversely, the permanent magnets 101 have a major base and a minor base substantially shaped as a portion of circular crown, and a pair of lateral surfaces joining such minor and major bases.

In this embodiment, the conveying elements 114 and the permanent magnets 101 are inserted in the supporting structure 100 via the through holes 110, 111. Preferably, the conveying elements 114 are inserted first, followed by the permanent magnets 101.

In the embodiment shown in Figures 3, 4a-4b, the conveying elements 114 have essentially the same shape as the permanent magnets 101.

The permanent magnets 101 have a shape that resembles the one described above with reference to the embodiment shown in Figures 1, 2a-2b. The permanent magnets 101 used in the embodiment shown in Figures 3, 4a-4b may be provided with recesses H1 (Figure 3) adapted to be coupled to respective fins H2 of the supporting structure 100, and in particular of the first discoid portion 11. The conveying elements 114 used in the embodiment shown in Figures 3, 4a-4b may be provided with recesses W1 (Figure 3) adapted to be coupled to respective fins W2 of the supporting structure 100, and in particular of the second discoid portion 12. In this embodiment, the unit is assembled by first housing the permanent magnets 101 and the conveying elements 114 in the first and second discoid portions 11, 12, respectively, by fitting them into the respective through holes 110, 111. Subsequently, the two discoid portions 11, 12 are mutually fastened, in the above-described configuration, in order to hold the permanent magnets 101 and the conveying elements 114 in position.

In one embodiment, the rotor 1 comprises a further rotor part 30 of the first type, the structure of which is substantially identical to that of said rotor part 10 of the first type.

Preferably, the rotor part 10 of the first type is positioned along the axis of rotation X of the rotor 1, at a first axial end X1.

Preferably, the rotor part 20 of the second type is positioned along the axis of rotation X of the rotor 1, axially spaced out relative to the rotor part 10 of the first type to define a gap for insertion of a stator unit 41 of the electric machine 2.

Preferably, the further rotor part 30 of the first type is positioned along the axis of rotation X of the rotor 1 at a second axial end X2 opposite to the first axial end X1. The further rotor part 30 of the first type is axially spaced out relative to the rotor part 20 of the second type to define a gap for insertion of a further stator unit 42 of the electric machine 2.

Preferably, the permanent magnets 101 of the rotor parts 10, 30 of the first type face towards the permanent magnets 220, 221 of the rotor part 20 of the second type.

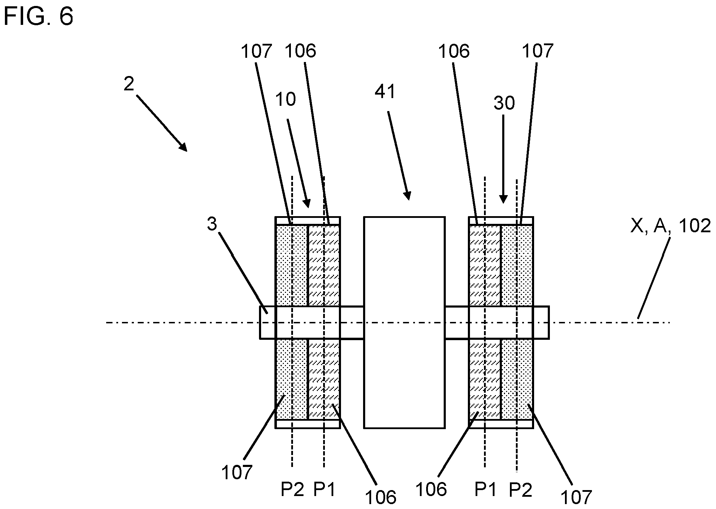

Figure 6 shows an electric machine 2 in accordance with the invention, which comprises a rotor 1, formed by a rotor part 10 of the first type and a further rotor part 30 of the first type, and a stator unit 41. The permanent magnets of the rotor parts 10, 30 face towards the stator unit 41.

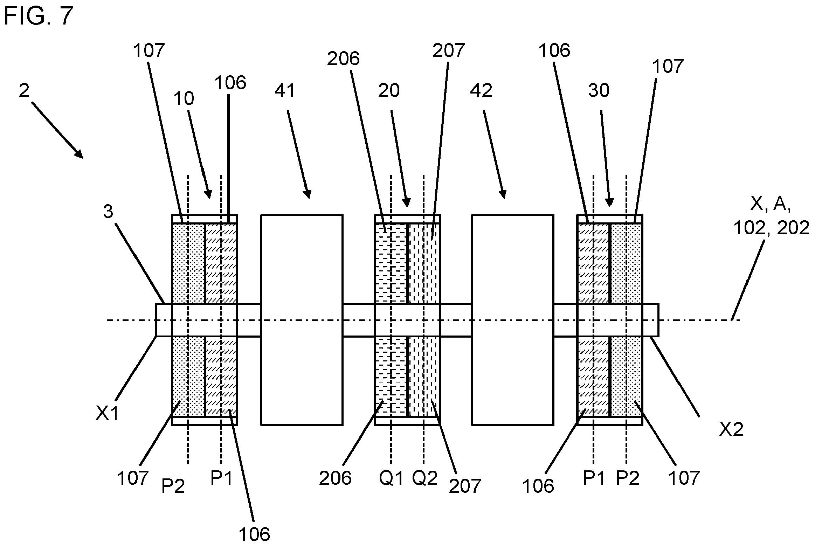

In a different embodiment, shown in Figure 7, the electric machine 2 comprises first and second stator units 41, 42 and a rotor 1, formed by a rotor part 10 of the first type, a further rotor part 30 of the first type and a rotor part 20 of a second type.

At the axial ends of the electric machine 2 there are the rotor parts 10, 30 of the first type, with permanent magnets facing inwards; the rotor part 20 of the second type lies in a substantially central position along the axis A of the electric machine 2; between the rotor part 10 of the first type and the rotor part 20 of the second type there is the first stator unit 41; between the rotor part 20 of the second type and the further rotor part 30 of the first type there is the second stator unit 42.

Each stator unit 41, 42 may be made in a *per* se known manner, and may comprise, for example, a toroidal core on which active elements, e.g. electric windings, are circumferentially mounted. Patent US 9,673,675 B2 describes one possible embodiment of a stator for axial-flux electric machines. Nonetheless, the stator units 41, 42 may also be designed otherwise, so long as they are compatible with the above-described rotor 1.

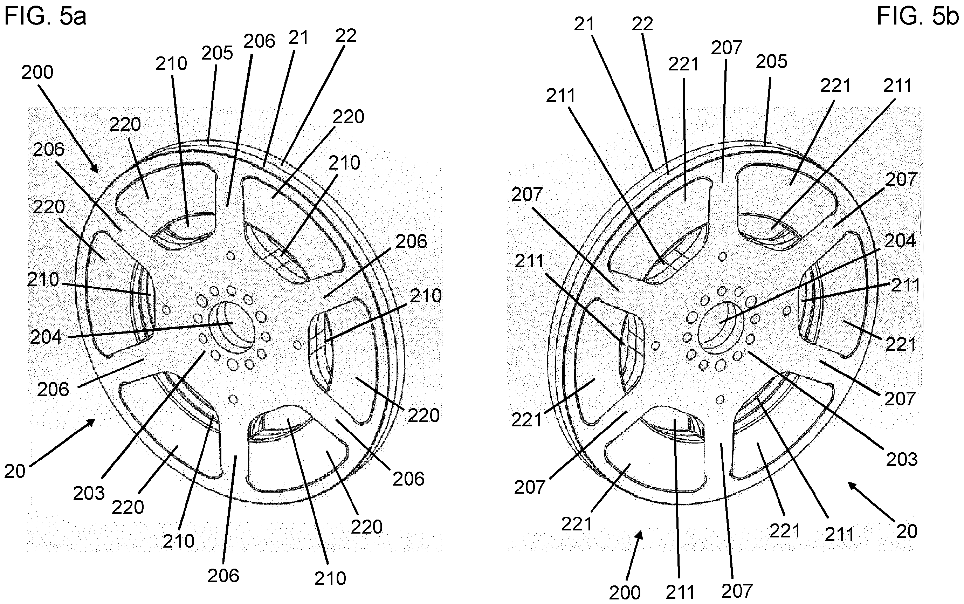

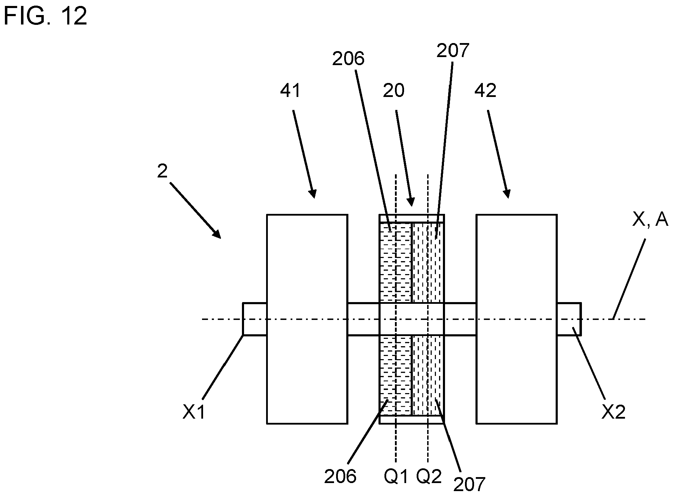

Note that the rotor part 20 of the second type may be used independently of the rotor part 10, 30 of the first type; in other words, an electric machine may be equipped with a rotor part 20 of the second type, with no rotor part 10, 30 of the first type. By way of example, Figure 12 shows an embodiment of an electric machine 2 comprising: first and second stator parts 41, 42, and a rotor part 20 of the second type interposed, along the axis A of the electric machine 2, between the first stator part 41 and the second stator part 42. The structure of the rotor part 20 of the second type used in this embodiment is the one described above with reference to Figures 5a, 5b and 7.

The Applicant observes that each one of the above-described embodiments of the rotor 1 comprises one component 300 - preferably two or more components designed like the component 300 - which will be described below.

The present invention also relates, therefore, to a component 300 of a rotor 1 for axial-flux electric machines 2.

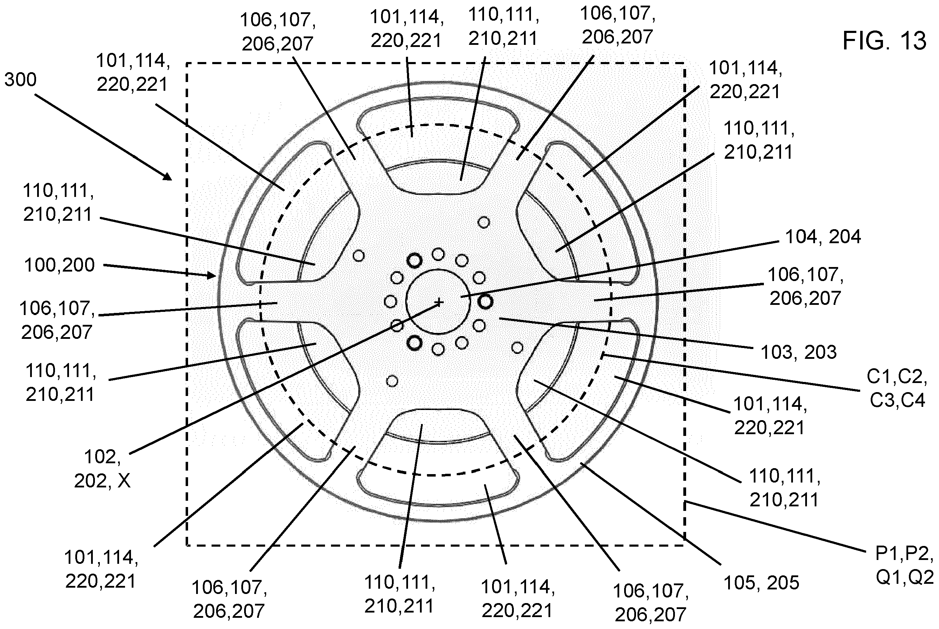

An embodiment of the component 300 is schematically illustrated in Figure 13.

The component 300 is configured for turning about an axis of rotation X, which coincides with the axis of rotation of the rotor 1.

The component 300 is adapted to be mounted on the rotary shaft 3 of the electric machine 2.

The component 300 comprises a supporting structure 100, 200 and a plurality of magnetic elements 101, 114, 220, 221 supported by the supporting structure 100, 200.

Advantageously, the magnetic elements may be:
- said permanent magnets 101;
- said conveying elements 114;
- said first permanent magnets 220;
- said second permanent magnets 221.

In a single component 300 there is preferably only one of the above-listed four groups of magnetic elements.

The supporting structure 100, 200 is a discoid structure having an axis 102, 202 coinciding with the axis of rotation X of the component 300.

The supporting structure 100, 200 comprises a central portion 103, 203 centered on the axis 102, 202 and having a seat 104, 204 shaped as a cylindrical through hole around the axis 102, 202 for insertion and connection to the shaft 3 of the electric machine 2.

The supporting structure 100, 200 comprises an annular structure 105, 205 centered on the axis 102, 202 and surrounding the central portion 103, 203.

The annular structure 105, 205 is connected to the central portion 103, 203 by radial connection elements 106, 107, 206, 207.

The connection elements 106, 107, 206, 207 are mutually angularly spaced apart in a plane P1, P2, Q1, Q2 perpendicular to the axis 102, 202.

Each pair of successive connection elements 106, 107, 206, 207 defines, in combination with the annular structure 105, 205 and the central portion 103, 203, a respective through hole 110, 111, 210, 211.

Each magnetic element 101, 114, 220, 221 is inserted and supported in a respective through hole 110, 111, 210, 211.

The magnetic elements 101, 114, 220, 221 are arranged along a circumference C1, C2, C3, C4 centered on the axis 102, 202 and lying in a plane perpendicular to the axis 102, 202.

As aforesaid, the magnetic elements may be the above-described magnetic-flux conveying elements 114, belonging to the magnetic-flux conveying device.

As aforesaid, the magnetic elements may include permanent magnets 101, 220, 221, each one having its north pole and its south pole aligned in succession along a line parallel to the axis 102, 202. The south-north vector of each permanent magnet 101, 220, 221 defines a respective magnetic axis M, M', M" of the permanent magnet 101, 220, 221. The permanent magnets 101, 220, 221 are arranged in succession along the respective circumference C1, C3, C4 with their magnetic axes M, M', M" oriented in opposite and alternate directions parallel to the axis 102, 202.

Note that, for simplicity, the magnetic axes M, M', M" are not shown in Figure 13. For such magnetic axes M, M', M", reference can be made to Figures 8-10.

Preferably, each through hole 110, 111, 210, 211 contains and supports a respective magnetic element 101, 114, 220, 221.

In one embodiment, the connection elements 106, 107, 206, 207 are angularly equidistant around the axis 102, 202 of the supporting structure 100, 200.

In one embodiment, the connection elements 106, 107, 206, 207 are divided into two or more groups G1-G4; each group is angularly spaced apart from an adjacent group, so as to observe a central symmetry relative to the axis 102, 202 of the supporting structure 100, 200; the angular distance between adjacent groups is different from an angular distance between adjacent connection elements 106, 107, 206, 207 belonging to one same group. This possible arrangement is schematized in Figure 11, referring by way of example to the first connection elements 106.

The magnetic elements 101, 114, 220, 221 may be fixed in the respective through holes 110, 111, 210, 211 in different ways (not necessarily mutually exclusive). For example, they may be glued, held in position by fins (e.g. the fins H2, W2 shown in Figure 3, preferably associated with the recesses W1, H1), or held in position by portions of another component.

Note that, in practical terms, the component 300 may be formed by one of the above-mentioned discoid portions 11, 12, 21, 22, associated with the respective magnetic elements 101, 114, 220, 221. In particular, the component 300 may be formed by one of:
- the first discoid portion 11 and the permanent magnets 101;
- the second discoid portion 12 and the conveying elements 114;
- the first discoid portion 21 and the first permanent magnets 220;
- the second discoid portion 22 and the second permanent magnets 221.

Preferably, the rotor part 10 of the first type comprises two mutually secured components: a component formed by the first discoid portion 11 and the permanent magnets 101, and a component formed by the second discoid portion 12 and the conveying elements 114. The rotor part 30 of the first type has the same type of structure.

Preferably, the rotor part 20 of the second type may comprise a single component, formed by the first or second discoid portion 21, 22 and the first or second permanent magnets 220, 221.

The rotor part 20 of the second type may also be formed by two mutually secured components: a component formed by the first discoid portion 21 and the first permanent magnets 220, 221, and a component formed by the second discoid portion 22 and the second permanent magnets 221.

The invention attains important advantages.

First and foremost, the rotor in accordance with the invention can turn at very high speeds without rapidly undergoing structural deterioration. In particular, although the material employed for fabricating it is not particularly strong, the magnetic-flux conveying device will remain firmly constrained in the assigned position because of the above-described suitable supporting structure.

Furthermore, the rotor according to the invention can be manufactured in a simple and economical manner. In particular, the supporting structure may be identical for both the rotor part of the first type and the rotor part of the second type. In those embodiments wherein the supporting structure is made as two separate, mutually connected parts, each part (the portion dedicated to the permanent magnets of the rotor part of the first type; the portion dedicated to the conveying elements; the portion dedicated to the first plurality of permanent magnets of the rotor part of the second type; the portion dedicated to the second plurality of permanent magnets of the rotor part of the second type) may be identical to the other ones.

## Claims

1. Rotor (1) for an axial-flux electric machine (2), said rotor (1) being configured for turning about an axis of rotation (X) of its own, said rotor (1) comprising at least one rotor part (10) of a first type, adapted to be mounted on the rotary shaft (3) of the electric machine (2), wherein said rotor part (10) of the first type comprises a supporting structure (100) and a plurality of permanent magnets (101) supported by the supporting structure (100),
said rotor (1) being **characterized in that**:
the supporting structure (100) is a discoid structure having an axis (102) coinciding with the axis of rotation (X) of the rotor (1);
the supporting structure (100) comprises:
a central portion (103) centered on the axis (102) and having a seat (104) shaped as a cylindrical through hole around the axis (102) for insertion and connection to the shaft (3) of the electric machine (2);
an annular structure (105) centered on the axis (102) and surrounding the central portion (103), said annular structure (105) being connected to the central portion (103) by first and second radial connection elements (106, 107);
wherein the first connection elements (106) are mutually angularly spaced apart in a first plane (P1) perpendicular to the axis (102), each pair of successive first connection elements (106) defining, in combination with the annular structure (105) and the central portion (103), a respective first through hole (110);
wherein the second connection elements (107) are mutually angularly spaced apart in a second plane (P2) perpendicular to the axis (102) and spaced out relative to the first plane (P1) along the axis (102), each pair of successive second connection elements (107) defining, in combination with the annular structure (105) and the central portion (103), a respective second through hole (111);
wherein each permanent magnet (101) is inserted and supported in a respective first through hole (110) with its north pole and its south pole aligned in succession along a line parallel to the axis (102), wherein the south-north vector of the permanent magnet (101) defines a magnetic axis (M) of the permanent magnet (101), the plurality of permanent magnets (101) being arranged along a circumference (C1) centered on the axis (102) and lying in a plane perpendicular to the axis (102), wherein the permanent magnets (101) are arranged in succession along said circumference (C1) with their magnetic axes (M) oriented in opposite directions, in an alternate manner, parallel to the axis (102);
wherein the rotor part (10) of the first type further comprises a magnetic-flux conveying device formed by a plurality of magnetic-flux conveying elements (114) made of a material with high magnetic permeability, each one of the second through holes (111) containing and supporting a respective conveying element (114), said conveying elements (114) being arranged along a respective circumference (C2) centered on the axis (102) and lying in a respective plane perpendicular to the axis (102);
wherein the permanent magnets (101) and the conveying elements (104) are positioned on opposite sides of the supporting structure (100) along the axis (102) of the supporting structure (100);
wherein each conveying element (114) faces towards and is in contact with a respective one of said first connection elements (106);
wherein each permanent magnet (101) faces towards and is in contact with a respective one of said second connection elements (107);
wherein each permanent magnet (101) faces towards two conveying elements (114), said two conveying elements (114) being successive around the axis (102) and separated by the second connection element (107) facing towards and in contact with said permanent magnet (101).

2. Rotor (1) according to claim 1, wherein each one of the first through holes (110) contains and supports a respective permanent magnet (101).

3. Rotor (1) according to claim 1 or 2, wherein the first connection elements (106) are angularly equidistant around the axis (102) of the supporting structure (100).

4. Rotor (1) according to claim 1 or 2, wherein the first connection elements (106) are divided into two or more groups, wherein each group is angularly spaced apart from an adjacent group so as to observe a central symmetry relative to the axis (102) of the supporting structure (100), wherein an angular distance between adjacent groups is different from an angular distance between adjacent first connection elements (106) belonging to the same group.

5. Rotor (1) according to any one of the preceding claims, wherein the second connection elements (107) are angularly equidistant around the axis (102) of the supporting structure (100).

6. Rotor (1) according to any one of the preceding claims, wherein each one of the first connection elements (106) is positioned in front of a respective second through hole (111), at a median radial axis of said respective second through hole (111).

7. Rotor (1) according to any one of the preceding claims, wherein each one of the second connection elements (107) is positioned in front of a respective one of said first through holes (110), at a median radial axis of said respective first through hole (110).

8. Rotor (1) according to any one of the preceding claims, further comprising a rotor part (20) of a second type, adapted to be mounted on the rotary shaft (3) of the electric machine (2), wherein said rotor part (20) of the second type comprises a supporting structure (200) and first and second permanent magnets (220, 221), said supporting structure (200) supporting the first and second permanent magnets (220, 221),
wherein the supporting structure (200) is a discoid structure having an axis (202) coinciding with the axis of rotation (X) of the rotor (1);
wherein the supporting structure (200) comprises:
a central portion (203) centered on the axis (202) and having a seat (204) shaped as a cylindrical through hole around the axis (202) for insertion and connection to the shaft (3) of the electric machine (2);
an annular structure (205) centered on the axis (202) and surrounding the central portion (203), said annular structure (205) being connected to the central portion (203) by first radial connection elements (206) and by second radial connection elements;
wherein the first connection elements (206) are mutually angularly spaced apart in a first plane (Q1) perpendicular to the axis (202);
wherein the second connection elements (207) are mutually angularly spaced apart in a second plane (Q2) perpendicular to the axis (202) and spaced out relative to the first plane (Q1) along the axis (202);
wherein each one of the first connection elements (206) faces towards a respective second connection element (207);
wherein each pair of successive first connection elements (206) defines, in combination with the annular structure (205) and the central portion (203), a respective first through hole (212);
wherein each pair of successive second connection elements (207) defines, in combination with the annular structure (205) and the central portion (203), a respective second through hole (211);
wherein each first through hole (210) faces towards a respective second through hole (211);
wherein each one of the first permanent magnets (220) is inserted and supported in a respective first through hole (210) with its north pole and its south pole aligned in succession along a line parallel to the axis (202), wherein the south-north vector of the first permanent magnet (220) defines a magnetic axis (M') of said first permanent magnet (220);
wherein the first permanent magnets (220) are arranged along a circumference (C3) centered on the axis (202) and lying in a plane perpendicular to the axis (202), wherein the first permanent magnets (220) are arranged in succession along said circumference (C3) with their magnetic axes (M') oriented in opposite directions, in an alternate manner, parallel to the axis (202);
wherein each one of the second permanent magnets (221) is inserted and supported in a respective second through hole (211) with its north pole and its south pole aligned in succession along a line parallel to the axis (202), wherein the south-north vector of the second permanent magnet (221) defines a magnetic axis (M") of said second permanent magnet (221);
wherein the second permanent magnets (221) are arranged along a circumference (C4) centered on the axis (202) and lying in a plane perpendicular to the axis (202), wherein the second permanent magnets (221) are arranged in succession along said circumference (C4) with their magnetic axes (M") oriented in opposite directions, in an alternate manner, parallel to the axis (202);
wherein the first permanent magnets (220) and the second permanent magnets (221) are positioned on opposite sides of the supporting structure (200) along the axis (202) of the supporting structure (200);
wherein each one of the first permanent magnets (220) faces towards a respective second permanent magnet (221),
wherein the respective magnetic axes (M', M") are oriented in such a way that the north pole of each first permanent magnet (220) faces towards the south pole of the respective second permanent magnet (221).

9. Rotor (1) according to any one of the preceding claims, wherein the supporting structure (100, 200) of at least one of said rotor parts (10, 20) comprises:
a first discoid portion (11, 21), comprising the first connection elements (106, 206),
a second discoid portion (12, 22), comprising the second connection elements (107, 207),
wherein said first discoid portion (11, 21) is connected to said second discoid portion (12, 22).

10. Rotor (1) according to claim 9, wherein the first discoid portion (11, 21) is connected to the second discoid portion (12, 22) in an angular position around the axis (102, 202) relative to the second discoid portion (12, 22) that can be selected from a set of one or more possible angular positions.

11. Rotor (1) according to any one of the preceding claims, wherein the supporting structure (100, 200) of at least one of said rotor parts (10, 20) is made as one piece with no discontinuity.

12. Rotor (1) according to any one of claims 8 to 11, further comprising:
the rotor part (10) of the first type positioned along the axis of rotation (X) of the rotor (1), at a first axial end (X1);
the rotor part (20) of the second type positioned along the axis of rotation (X) of the rotor (1), said rotor part (20) of the second type being axially spaced out relative to the rotor part (10) of the first type to define a gap for insertion of a stator unit (41) of said electric machine (2);
a further rotor part (30) of the first type positioned along the axis of rotation (X) of the rotor (1) at a second axial end (X2) opposite to said first axial end (X1), said further rotor part (30) of the first type being spaced out relative to the rotor part (20) of the second type to define a gap for insertion of a further stator unit (42) of said electric machine (2),
wherein the permanent magnets (106) of the rotor parts (10, 30) of the first type face towards the permanent magnets (220, 221) of the rotor part (20) of the second type.

13. Rotor according to anyone of the preceding claims wherein the first connection elements (106, 206) of the rotor part (10) of the first type and/or of the rotor part (30) of the second type, and/or the second connection elements (107, 207) of the rotor part (10) of the first type and/or of the rotor part (30) of the second type, are divided into two or more groups, wherein each group is angularly spaced apart from an adjacent group so as to observe a central symmetry with respect to the axis (102, 202) of the supporting structure (100, 200), wherein an angular distance between adjacent groups is different from an angular distance between adjacent connection elements (106, 107, 206, 207) belonging to a same group.

14. Axial-flux electric machine (2) comprising:
a rotor (1), rotatably mounted about an axis (A) of the electric machine (2), which coincides with the axis (X) of the rotor (1);
at least one stator unit (41);
**characterized in that** said rotor (1) is in accordance with any one of the preceding claims,
wherein said stator unit (41) is positioned along the axis (A) of the electric machine (2) and is electromagnetically coupled to a plurality (106) of permanent magnets of a rotor part (10, 30) of said rotor (1).

15. Electric machine (2) according to claim 14, wherein said rotor (1) is in accordance with claim 12, wherein said stator unit (41) is positioned between the rotor part (10) of the first type and the rotor part (20) of the second type;
wherein said electric machine (2) comprises a further stator unit (42) positioned between the rotor part (20) of the second type and the further rotor part (30) of the first type.
